# EUROPÄISCHE PATENTSCHRIFT

(11) **EP 4 365 207 B1**
(45) Veröffentlichungstag und Bekanntmachung des Hinweises auf die Patenterteilung: **09.07.2025**
(21) Anmeldenummer: 23204323.2
(22) Anmeldetag: 18.10.2023
(51) Int. Cl.: C08C 1/04

(54) **VERFAHREN ZUM TRENNEN VON NATURKAUTSCHUK AUS PFLANZENMATERIAL**
METHOD FOR SEPARATING NATURAL RUBBER FROM PLANT MATERIAL
PROCÉDÉ DE SÉPARATION DE CAOUTCHOUC NATUREL À PARTIR DE MATIÈRE VÉGÉTALE

(30) Priorität: 02.11.2022 DE 102022211568
(43) Veröffentlichungstag der Anmeldung: 08.05.2024
(73) Patentinhaber: Continental Reifen Deutschland GmbH, 30175 Hannover (DE)
(72) Erfinder: Herzog, Katharina, 30165 Hannover (DE); Recker, Carla, 30165 Hannover (DE); Behm, Frank, 30165 Hannover (DE); Janczak, Norbert, 30165 Hannover (DE); Venz, Carsten, 30165 Hannover (DE); Fichtner, Clemens, 30165 Hannover (DE); Reuschel, Annika, 30165 Hannover (DE)
(74) Vertreter: Continental Corporation

(56) Entgegenhaltungen:
- WO-A2-2014/127206
- CN-U- 214 486 029
- US-A1- 2016 304 830

## Beschreibung

Die Erfindung betrifft ein Verfahren zum Trennen von Naturkautschuk aus Pflanzenmaterial aus einer naturkautschukreichen Phase sowohl von Verunreinigungen als auch von einer Nassphase nach einem Extraktionsverfahren. Weiterhin betrifft die Erfindung eine Separationseinheit zum Trennen von Naturkautschuk aus Pflanzenmaterial sowie eine Separationsanlage, die mehrere Separationseinheiten aufweist, und Naturkautschuk hergestellt mit dem erfindungsgemäßen Verfahren.

Bekanntermaßen gibt es Pflanzenmaterialien, die Naturkautschuk enthalten. Um Naturkautschuk aus den Pflanzenmaterialien zu gewinnen, ist der Naturkautschuk aus der Pflanzenmatrix zu extrahieren und anschließend der Naturkautschuk von Verunreinigungen, beispielsweise aus umgebendem Pflanzenmaterial, zu separieren. Der extrahierte Naturkautschuk ist sowohl von den Verunreinigungen als auch von einer Nassphase beziehungsweise flüssigen Phase der erzeugten naturkautschukreichen Phase zu trennen.

Industriell genutzter Naturkautschuk wird überwiegend von Hevea-Bäumen gewonnen. Vorliegend sollen jedoch alternative Quelle für Naturkautschuk verfügbar gemacht werden, indem Naturkautschuk aus anderen Pflanzen nutzbar gemacht wird.

Vor diesem Hintergrund liegt der Erfindung die Aufgabe zugrunde, ein Verfahren sowie eine Separationseinheit derart auszuführen, dass Naturkautschuk effizient und in hoher Qualität aus der naturkautschukreichen Phase gewonnen werden kann.

Diese Aufgabe wird gelöst mit einem Verfahren gemäß den Merkmalen des Patentanspruches 1 sowie mit einer Separationseinheit, einer Separationsanlage sowie mit Naturkautschuk gemäß den nebengeordneten Ansprüchen. Die Unteransprüche betreffen besonders zweckmäßige Weiterbildungen der Erfindung.

Erfindungsgemäß ist also ein Verfahren zum Trennen von Naturkautschuk aus Pflanzenmaterial aus einer naturkautschukreichen Phase sowohl von Verunreinigungen als auch von einer flüssigen Phasen nach einem Extraktionsverfahren mit den folgenden Schritten vorgesehen:
a) Fördern der naturkautschukreichen Phase zu einem Mittel zum Trennen nach Partikelgröße,
b) Trennen des Naturkautschuks von den Verunreinigungen und der flüssigen Phase mit dem Mittel zum Trennen nach Partikelgröße,
c) Fördern des abgetrennten Naturkautschuks zu einem Mittel zum Trennen nach Dichteunterschieden,
d) Trennen des Naturkautschuks von weiteren Verunreinigungen mit dem Mittel zum Trennen nach Dichteunterschieden,
e) Entnehmen des gereinigten Naturkautschuks aus dem Mittel zum Trennen nach Dichteunterschieden.

Naturkautschuk aus Pflanzenmaterial, insbesondere aus Wurzelmaterial, kann in einer hohen Qualität und mit einer hohen Effizienz mit einem nassen Extraktionsverfahren aus dem Pflanzenmaterial extrahiert werden. Es entsteht eine naturkautschukreiche Phase mit dem Naturkautschuk und einem flüssigen Bestandteil, in dem Verschmutzungen gelöst sind und nicht gelösten Verschmutzungen. Erfindungsgemäß wurde festgestellt, dass Naturkautschuk mit einem Mittel zum Trennen nach Partikelgröße schonend sowie effizient von den flüssigen Bestandteilen sowie den darin gelösten Verschmutzungen getrennt werden kann.

Weiterhin wurde erkannt, dass auch nicht gelöste Verschmutzungen, die eine geringere Größe als die vorliegenden Naturkautschukflocken aufweisen, durch ein Mittel zum Trennen nach Partikelgröße effizient vom Naturkautschuk getrennt werden können.

Verschmutzungen mit einer Größe von Naturkautschukflocken oder größer werden durch das Mittel zum Trennen nach Partikelgröße nicht vom Naturkautschuk getrennt. Um diese Verschmutzungen vom Naturkautschuk zu trennen, wird der von der flüssigen Phase abgetrennte Naturkautschuk mit den verbleibenden Verschmutzungen in ein Mittel zum Trennen nach Dichteunterschieden gefördert. Die Naturkautschukflocken schwimmen auf der Oberfläche der flüssigen Phase des Mittels zum Trennen nach Dichteunterschieden auf, wohingegen sich Verschmutzungen mit einer höheren Dichte am Boden des Mittels zum Trennen nach Dichteunterschieden absetzen oder in der flüssigen Phase verbleiben. Die somit weiter aus der naturkautschukreichen Phase isolierten Naturkautschukflocken werden von der Oberfläche der flüssigen Phase entnommen und werden hierdurch von den Verschmutzungen getrennt.

Durch das Trennen nach Partikelgröße und die nachfolgende Trennung unter Ausnutzung der unterschiedlichen Dichten im Mittel zum Trennen nach Dichteunterschieden werden die Naturkautschukflocken effizient sowie schonend von den weiteren Bestandteilen der weiteren flüssigen Phase getrennt.

Eine bevorzugte Ausführungsform sieht vor, dass es sich bei dem Naturkautschuk aus Pflanzenmaterial von Pflanzen handelt, die Mitglieder der Asteraceae, wie Taraxacum sp. oder Scorzonera sp., insbesondere Taraxacum kok-saghyz, Taraxacum krim-saghyz, Taraxacum bicorne, Taraxacum brevicorniculatum, oder Scorzonera tau-saghyz, Scorzonera Uzbekistanica, Scorzonera teke-saghyz, Scorzonera hispanica, Scorzonera tausaghyz, oder Guayule (Parthenium argentatum), oder auch andere Spezies wie Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, oder Silphium sp., oder Mischungen dieser Pflanzen sowie natürlich vorkommende oder gezüchtete Hybride der vorgenannten Spezies Hybride mit mindestens einer der vorgenannten Spezies sind, wobei als Hybride alle Ausprägungsformen mischerbiger Pflanzen anzusehen sind. Diese Pflanzen haben sich als besonders geeignet zur Gewinnung von Naturkautschuk erwiesen.

Bevorzugt wurde der Naturkautschuk aus Pflanzenmaterial mit einer Kugelmühle durch Scheren und beziehungsweise oder Quetschen bearbeitet.

Diese Pflanzen haben sich als besonders geeignet zur Gewinnung von Naturkautschuk erwiesen, insbesondere nach einer Bearbeitung mit einer Kugelmühle.

Eine weitere bevorzugte Ausführungsform sieht vor, dass das Mittel zum Trennen nach Partikelgröße ein Sieb und beziehungsweise oder eine Filtriereinheit ist. Siebe und Filtriereinheiten haben sich als zuverlässige und wirtschaftlich einsetzbare Mittel zum Trennen nach Partikelgröße herausgestellt.

Eine weitere bevorzugte Ausführungsform sieht vor, dass das Mittel zum Trennen nach Dichteunterschieden eine Flotationsanlage und beziehungsweise oder ein Schwimm-Sink-Becken und beziehungsweise oder ein Abscheider, insbesondere ein Sedimentierer ist, wobei der Sedimentierer insbesondere eine Zentrifuge und beziehungsweise oder ein Dekantierer ist. Die genannten Mittel zum Trennen nach Dichteunterschieden, die auch eine Flotationsanlage sein können, da diese auch nach Dichteunterschieden trennt, haben sich als besonders effektiv beim Trennen nach Dichteunterschieden erwiesen und trennen auch bei geringen Dichteunterschieden mit einer hohen Zuverlässigkeit bei einem hohen möglichen Durchsatz.

Eine weitere bevorzugte Ausführungsform sieht vor, dass Schritte des Verfahrens und bevorzugt alle Schritte des Verfahrens kontinuierlich durchgeführt werden. Ein kontinuierliches Verfahren gewährleistet einen hohen Durchsatz bei einer hohen Effizienz bei verhältnismäßig kompakten und günstigen Anlagen. Unter einem kontinuierlichen Verfahren wird ein Verfahren verstanden, das nicht chargenweise durchgeführt wird. Bevorzugt weist das Verfahren über die Zeit konstante Prozessparameter auf. Aber auch Verfahren mit in einem gewissen Rahmen nicht konstanten Prozessparametern werden unter einem kontinuierlichen Verfahren verstanden.

Eine weitere bevorzugte Ausführungsform sieht vor, dass die naturkautschukreiche Phase vor dem Schritt a) von einer Extraktionseinheit in ein Vorratsbecken gefördert wird. Das Fördern der naturkautschukreichen Phase in ein Vorratsbecken ermöglicht eine konstante Zuführung der naturkautschukreichen Phase zum Trennverfahren, wodurch das Trennverfahren effizient und mit konstanter Qualität durchgeführt werden kann. Das Extraktionsverfahren wird vom Trennverfahren entkoppelbar.

Das Trennen in Schritt b) kann durch alle dem Fachmann bekannten Trennverfahren ausgeführt werden. Eine weitere bevorzugte Ausführungsform sieht vor, dass das Trennen in Schritt b) durch Trommelsieben, bevorzugt mit einem weiteren Spülschritt mit Prozesswasser oder Frischwasser, durchgeführt wird. Es wurde festgestellt, dass das Sieben mittels eines Trommelsiebs Naturkautschuk sowohl schonend als auch effizient abtrennt. Bevorzugt kann durch ein geeignetes Anordnen der Rotationsachse des Trommelsiebs die Fördergeschwindigkeit des Naturkautschuks durch das Trommelsieb eingestellt werden. Es hat sich als besonders vorteilhaft herausgestellt, den Naturkautschuk im Trommelsieb mit Prozesswasser oder Frischwasser zu spülen, da hierdurch Verunreinigungen besonders effizient abgetrennt werden.

Eine weitere bevorzugte Ausführungsform sieht vor, dass der Naturkautschuk vor dem Fördern in Schritt c) mit Prozesswasser oder Frischwasser vermischt wird. Eine zuverlässige sowie kosteneffiziente Fördermöglichkeit wird ermöglicht. Weiterhin wurde festgestellt, dass durch ein Fördern des Naturkautschuks zusammen mit Prozesswasser oder Frischwasser eine zusätzliche Reinigungswirkung erreicht werden kann.

Eine weitere bevorzugte Ausführungsform sieht vor, dass der abgetrennte Naturkautschuk auf oder unterhalb der Oberfläche der flüssigen Phase in dem Schwimm-Sink-Becken in das Schwimm-Sink-Becken gefördert wird. Ein Fördern des Naturkautschuks auf die Oberfläche der flüssigen Phase ist besonders kostengünstig realisierbar und verursacht durch das Auftreffen auf die Oberfläche einen weiteren Reinigungseffekt.

Eine weitere bevorzugte Ausführungsform sieht vor, dass der Naturkautschuk dem Schwimm-Sink-Becken durch Schöpfen von der Oberfläche der flüssigen Phase entnommen wird. Ein Abschöpfen des Naturkautschuks von der Oberfläche hat sich als ein besonders einfaches sowie zuverlässiges und schonendes Verfahren zum Trennen des Naturkautschuks von der Oberfläche herausgestellt.

Eine weitere bevorzugte Ausführungsform sieht vor, dass die flüssige Phase eine wässrige Phase ist, wobei das Mischungsverhältnis der festen Bestandteile zur wässrigen Phase im Verhältnis 1 zu 5 bis 1 zu 500, bevorzugt im Verhältnis 1 zu 10 bis 1 zu 200 und weiter bevorzugt im Verhältnis 1 zu 20 bis 1 zu 100 beträgt. Die Verwendung einer wässrigen Phase als flüssige Phase hat sich als vorteilhaft für die Qualität des Naturkautschuks herausgestellt. Es hat sich herausgestellt, dass die genannten Mischungsverhältnisse zu einer besonders effizienten Trennung nach Dichteunterschieden führen.

Eine weitere bevorzugte Ausführungsform sieht vor, dass vom Naturkautschuk zumindest die Schritte a) bis e) zumindest zweimal, bevorzugt zumindest dreimal, durchlaufen werden. Ein mehrfaches Durchlaufen der Schritte a) bis e) hat überraschenderweise gezeigt, dass der Anteil der verbleibenden Verschmutzungen durch ein Wiederholen der gleichen Schritte weiter reduziert werden kann. Hierbei ist unter einem Durchlaufen der Schritte a) bis e) zu verstehen, dass alle Schritte wiederholt werden, und zwar in der genannten Reihenfolge, es können jedoch auch lediglich einzelne dieser Schritte wiederholt werden, wobei die einzelnen Schritte hier nach dem Durchlaufen aller Schritte a) bis e) wiederholt werden können oder aber nach dem Durchlaufen einiger der Schritte a) bis e).

Erfindungsgemäß ist eine Separationseinheit zum Trennen von Naturkautschuk aus Pflanzenmaterial aus einer naturkautschukreichen Phase von Verunreinigungen und einer Nassphase nach einem Extraktionsverfahren, bevorzugt zum Durchführen eines erfindungsgemäßen Verfahrens vorgesehen, mit einer ersten Fördereinheit zum Fördern des Naturkautschuks zu einem Mittel zum Trennen nach Partikelgröße, das Mittel zum Trennen nach Partikelgröße zum Trennen des Naturkautschuks von Verunreinigungen, eine zweite Fördereinheit zum Fördern des mit dem Mittel zum Trennen nach Partikelgröße abgetrennten Naturkautschuks zu einem Mittel zum Trennen nach Dichteunterschieden, das Mittel zum Trennen nach Dichteunterschieden zum Separieren des Naturkautschuks von weiteren Verunreinigungen und ein Mittel zum Entnehmen des Naturkautschuks aus dem Mittel zum Trennen nach Dichteunterschieden.

Es wurde festgestellt, dass Naturkautschuk mit einem Mittel zum Trennen nach Partikelgröße schonend sowie effizient von den flüssigen Bestandteilen sowie den darin gelösten und ungelösten Verschmutzungen getrennt werden kann.

Durch das Trennen nach Partikelgröße und die nachfolgende Trennung unter Ausnutzung der unterschiedlichen Dichten im Mittel zum Trennen nach Dichteunterschieden werden die Naturkautschuk Flocken effizient sowie schonend von den weiteren Bestandteilen der Nassphase trennbar.

Die Separationseinheit kann für alle den dem Fachmann bekannten Prozessprinzipien ausgelegt sein, also sowohl diskontinuierlich, kontinuierlich oder Mischformen derselben.

Eine bevorzugte Ausführungsform sieht vor, dass die Separationseinheit für einen kontinuierlichen Betrieb ausgelegt ist. Ein kontinuierliches Verfahren gewährleistet einen hohen Durchsatz bei einer hohen Effizienz bei verhältnismäßig kompakten und günstigen Anlagen, wobei der Naturkautschuk besonders schonend abtrennbar ist.

Die Separationseinheit kann durch alle dem Fachmann bekannten Einheiten zur Durchführung von Fest-Flüssig-Trennoperationen ausgeführt werden. Eine bevorzugte Ausführungsform ist ein Spaltensieb als Trenneinheit nach Partikelgröße, das als Bogensieb oder insbesondere bevorzug als rotierendes Spaltensieb, das bevorzugt ein Trommelsieb ist, dass bevorzugt eine Spüleinheit zum weiteren Spülen des Naturkautschuks aufweist, wobei das Sieb bevorzugt eine Spaltgröße von 0,5 mm bis 8 mm insbesondere von 1 mm bis 4 mm aufweist. Es wurde festgestellt, dass mit einem Sieb, insbesondere einem rotierendem Spaltensieb und weiter vorteilhaft mit einem Trommelsieb Naturkautschuk sowohl besonders schonend als auch effizient abtrennbar ist. Bevorzugt kann durch ein geeignetes Anordnen der Rotationsachse des Trommelsiebs die Fördergeschwindigkeit des Naturkautschuks durch das Trommelsieb einstellbar sein. Es hat sich als besonders vorteilhaft herausgestellt, den Naturkautschuk in dem Mittel zum Trennen nach Partikelgröße mit Prozesswasser oder Frischwasser zu spülen, da hierdurch Verunreinigung besonders effizient abgetrennt werden können.

Die Fördereinheiten des Verfahrens können durch alle dem Fachmann bekannten geeigneten Fördereinheiten zur Förderung von Fest-Flüssig-Gemischen ausgeführt werden. Eine weitere bevorzugte Ausführungsform sieht vor, dass die erste Fördereinheit und beziehungsweise oder die zweite Fördereinheit eine Verdrängerpumpe, besonders bevorzugt eine Impellerpumpe ist. Es wurde festgestellt, dass eine Verdrängerpumpe, besonders bevorzugt eine Impellerpumpe das Naturkautschuk-Flüssigkeits-Gemisch in schonender Weise fördert.

Eine weitere bevorzugte Ausführungsform sieht vor, dass das Mittel zum Trennen nach Dichteunterschieden ein Schwimm-Sink-Becken ist, wobei das Schwimm-Sink-Becken im unteren Bereich eine Entnahmevorrichtung zur Entnahme von Verunreinigungen aufweist. Durch eine derartige Entnahmevorrichtung ist das Entnehmen von sich abgelagerten Verschmutzungen in einfacher Weise möglich. Eine Unterbrechung des Trennverfahrens zum Reinigen des Schwimm-Sink-Beckens kann entfallen. Die Entnahme kann auch kontinuierlich und beziehungsweise oder halbkontinuierlich ausgeführt werden.

Eine weitere bevorzugte Ausführungsform sieht vor, dass das Schwimm-Sink-Becken ein Abschöpfmittel aufweist, insbesondere ein Förderband, bevorzugt ein wasserdurchlässiges Förderband, wobei das Förderband bevorzugt aus der flüssigen Phase herausragt. Ein Abschöpfmittel hat sich als besonders geeignet zum Entfernen des Naturkautschuks von der Oberfläche der flüssigen Phase erwiesen. Als besonders vorteilhaft hat sich hierbei ein Förderband erwiesen, das aus der flüssigen Phase herausragt und dadurch den Naturkautschuk effektiv von Oberfläche der flüssigen Phase abtransportieren kann.

Erfindungsgemäß ist eine Separationsanlage aufweisend eine erfindungsgemäße Separationseinheit vorgesehen, wobei zumindest eine weitere Separationseinheit oder einzelne Komponenten einer Separationseinheit mehrfach ausgeführt sind oder derart in Verbindung stehen, dass zumindest einzelne Komponenten einer Separationseinheit vom Naturkautschuk mehrfach durchlaufbar sind, wobei bevorzugt zumindest zwei weitere Separationseinheiten der einen Separationseinheit folgend angeordnet sind. Ein mehrfaches Durchlaufen des Naturkautschuks durch eine Separationseinheit oder einzelner Komponenten einer Separationseinheit hat überraschenderweise gezeigt, dass der Anteil der verbleibenden Verschmutzungen hierdurch weiter reduziert werden kann. Unter Komponenten einer Separationseinheit werden insbesondere Mittel zum Trennen nach Partikelgröße und Mittel zum Trennen nach Dichteunterschied verstanden.

Erfindungsgemäß ist von Verunreinigungen und von einer Nassphase getrennter Naturkautschuk aus Pflanzenmaterial, von Verunreinigungen und einer Nassphase getrennt durch das erfindungsgemäße Verfahren und bevorzugt getrennt mit einer erfindungsgemäßen Separationseinheit vorgesehen. Es hat sich gezeigt, dass Naturkautschuk aus Pflanzenmaterial aufgrund der schonenden Behandlung eine besonders hohe Qualität aufweist, wenn er nach einem Extraktionsverfahren durch das erfindungsgemäße Verfahren, insbesondere mit einer erfindungsgemäßen Separationseinheit, von Verunreinigungen und einer Nassphase getrennt wird.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigen in
Fig. 1 eine Darstellung des Kautschukgewinnungsverfahrens mit vor- und nachgelagerten Prozessschritten;
Fig. 2 eine Darstellung eines Trennverfahrens zum Trennen von Naturkautschuk von Verunreinigungen;
Fig. 3 eine Darstellung einer Separationseinheit zur Trennung von Naturkautschuk von Verunreinigungen.

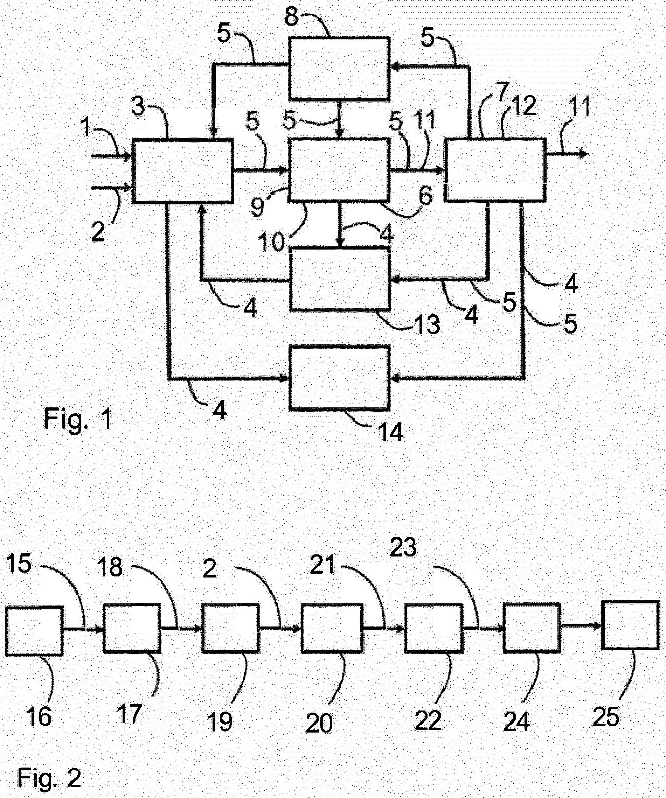

Figur 1 zeigt eine Darstellung des Kautschukgewinnungsverfahrens aus Löwenzahn mit vor- und nachgelagerten Prozessschritten. Frischwurzeln 1 des Löwenzahns und Frischwasser 2 werden in einem ersten Verfahrensschritt einer Vorkonditionierungsvorrichtung 3 zugeführt. Die Frischwurzeln 1 werden in der Vorkonditionierungsvorrichtung 3 durch das Frischwasser 2 gereinigt und vorkonditioniert. Weiterhin kann der Vorkonditionierungsvorrichtung 3 aufbereitetes Prozesswasser 4 zugeführt werden sowie Wurzelmaterial 5, das bereits einmal einen Extraktionsschritt 6 durchlaufen hat und folgend in einem Separationsschritt 7 separiert und einem Materialpuffer 8 zwischengespeichert wurde.

Nach der Vorkonditionierung wird das Wurzelmaterial 5 einer Extraktionseinheit 9 zugeführt. In der Extraktionseinheit 9, die als Kugelmühle 10 ausgeführt ist, wird das Wurzelmaterial 5 weiter zerkleinert. Es werden die Wurzelbestandteile voneinander gelöst, wobei insbesondere Naturkautschuk 11 vom restlichen Wurzelmaterial 5 gelöst wird. Hierzu wird der Kugelmühle 10 Frischwasser 2 oder Prozesswasser 4 zugeführt. Das Wurzelmaterial 5 und der Naturkautschuk 11 werden folgend auf den Extraktionsschritt 6 zu einer Separationseinheit 12 gefördert. Die Separationseinheit 12 trennt den Naturkautschuk 11 von dem weiteren Wurzelmaterial 5. Das weitere Wurzelmaterial 5 wird zum Teil mit dem Prozesswasser 4 einer Wasseraufbereitung 13 zugeführt und von dieser in Prozesswasser 4 und Reststoffe separiert. Das Prozesswasser 4 kann der Vorkonditionierungsvorrichtung 3 zugeführt werden. Der Wasseraufbereitung 13 kann Prozesswasser 4 aus der Extraktionseinheit 9 zugeführt werden.

Ein zweiter Teil des weiteren Wurzelmaterials 5 und des Prozesswassers 4 aus der Separationseinheit 12 wird einer Entsorgungseinheit 14 zugeführt. Der Entsorgungseinheit 14 wird weiterhin Prozesswasser 4 aus der Vorkonditionierungsvorrichtung 3 zugeführt.

Ein dritter Teil des weiteren Wurzelmaterials 5 aus der Separationseinheit 12 kann dem Materialpuffer 8 zugeführt werden und kann von dort in die Vorkonditionierungsvorrichtung 3 oder in die Extraktionseinheit 9 weiterbefördert werden.

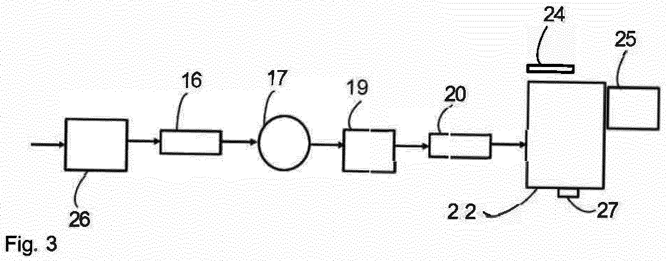

In Figur 2 ist ein Trennverfahren zum Trennen von Naturkautschuk 11 von Verunreinigungen dargestellt. Das Verfahren sieht in einem ersten Schritt 15 das Fördern einer naturkautschukreichen Phase mit einer ersten Fördereinheit 16 von einem in Figur 3 dargestellten Vorratsbecken 26, dass die naturkautschukreiche Phase von einer Extraktionseinheit aufnimmt, zu einem Mittel zum Trennen nach Partikelgröße 17 in Form eines Siebs vor. Das Sieb ist ein Trommelsieb mit einer zusätzlichen Spüleinheit. Das Trommelsieb rotiert um seine Rotationsachse herum, wobei die Rotationsachse eingangsseitig höher angeordnet ist als ausgangsseitig. Der Naturkautschuk 11 wird durch die Rotation des Trommelsiebs und schwerkraftgetrieben durch das Trommelsieb gefördert und hierbei in einem zweiten Schritt 18 von einer Nassphase und durch die zusätzliche Spüleinheit zusätzlich von Verunreinigungen getrennt.

Das Trommelsieb fördert den Naturkautschuk 11 unmittelbar in einen Zwischenspeicher 19, in dem der Naturkautschuk 11 mit Prozesswasser 4 oder Frischwasser 2 vermischt wird. Eine zweite Fördereinheit 20, die als eine Impellerpumpe ausgeführt ist, fördert in einem dritten Schritt 21 die naturkautschukreiche Phase in ein Mittel zum Trennen nach Dichteunterschieden 22 in Form eines Schwimm-Sink-Beckens.

In einem vierten Schritt 23 verfährt ein Mittel 24 in Form einer Schöpflippe über die Oberfläche der naturkautschukreichen Phase und fördert den Naturkautschuk 11 aus dem Schwimm-Sink-Becken in einen Sammelbehälter 25. Noch vorliegende Verunreinigungen der naturkautschukreichen Phase sinken zum Boden des Schwimm-Sink-Beckens und werden dort über eine in Figur 3 dargestellte Entnahmevorrichtung 27 dem Schwimm-Sink-Becken entnommen.

In Figur 3 ist eine Separationseinheit 12 zur Trennung von Naturkautschuk 11 von Verunreinigungen und einer Nassphase dargestellt. Die naturkautschukreiche Phase wird von einer Extraktionseinheit in das Vorratsbecken 26 gefördert und dort zwischengespeichert. Eine erste Fördereinheit 16 in Form einer Impellerpumpe fördert die naturkautschukreiche Phase zu einem Sieb, das als ein Trommelsieb ausgeführt ist. Die Rotationsachse des Trommelsiebs ist eingangsseitig höher angeordnet als ausgangsseitig, sodass durch die Rotation nicht nur eine Trennung des Naturkautschuks 11 von der flüssigen Phase erreicht wird, sondern auch eine Förderung des Naturkautschuks 11 durch die Trommel. Der in das Trommelsieb gegebene und gespülte Naturkautschuk 11 gelangt in einen Zwischenspeicher 19 in dem er mit Frischwasser 2 oder Prozesswasser 4 vermengt wird. Aus dem Zwischenspeicher 19 wird die naturkautschukreiche Phase mit einer zweiten Fördereinheit 20, die ebenfalls als eine Impellerpumpe ausgeführt ist, in das Schwimm-Sink-Becken gefördert. Der Naturkautschuk 11 schwimmt aufgrund seiner geringen Dichte auf der flüssigen Phase auf und wird mittels eines Schöpflippe aus dem Schwimm-Sink-Becken in einen Sammelbehälter 25 befördert.

### Bezugszeichenliste

- 1: Pflanzenmaterial
- 2: Frischwasser
- 3: Vorkonditionierungsvorrichtung
- 4: Prozesswasser
- 5: Wurzelmaterial

- 6: Extraktionsschritt
- 7: Separationsschritt
- 8: Materialpuffer
- 9: Extraktionseinheit
- 10: Kugelmühle

- 11: Naturkautschuk
- 12: Separationseinheit
- 13: Wasseraufbereitung
- 14: Entsorgungseinheit
- 15: erster Schritt

- 16: erste Fördereinheit
- 17: Mittel zum Trennen nach Partikelgröße
- 18: zweiter Schritt
- 19: Zwischenspeicher
- 20: zweite Fördereinheit

- 21: dritter Schritt
- 22: Mittel zum Trennen nach Dichteunterschieden
- 23: vierter Schritt
- 24: Mittel

- 25: Sammelbehälter
- 26: Vorratsbecken
- 27: Entnahmevorrichtung

## Patentansprüche

1. Verfahren zum Trennen von Naturkautschuk (11) aus Pflanzenmaterial aus einer naturkautschukreichen Phase sowohl von Verunreinigungen als auch von einer Nassphase nach einem Extraktionsverfahren mit den folgenden Schritten:
a) Fördern der naturkautschukreichen Phase zu einem Mittel zum Trennen nach Partikelgröße (17),
b) Trennen des Naturkautschuks (11) von den Verunreinigungen und der Nassphase mit dem Mittel zum Trennen nach Partikelgröße (17),
c) Fördern des abgetrennten Naturkautschuks (11) zu einem Mittel zum Trennen nach Dichteunterschieden (22),
d) Trennen des Naturkautschuks von weiteren Verunreinigungen mit dem Mittel zum Trennen nach Dichteunterschieden,
e) Entnehmen des gereinigten Naturkautschuks (11) aus dem Mittel zum Trennen nach Dichteunterschieden (22).

2. Verfahren nach Anspruch 1, **dadurch gekennzeichnet, dass** es sich bei dem Naturkautschuk (11) aus Pflanzenmaterial von Pflanzen handelt, die Mitglieder der Asteraceae, wie Taraxacum sp. oder Scorzonera sp., insbesondere Taraxacum kok-saghyz, Taraxacum krim-saghyz, Taraxacum bicorne, Taraxacum brevicorniculatum, oder Scorzonera tau-saghyz, Scorzonera Uzbekistanica, Scorzonera teke-saghyz, Scorzonera hispanica, Scorzonera tausaghyz, oder Guayule (Parthenium argentatum), oder auch andere Spezies wie Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, oder Silphium sp., oder Mischungen dieser Pflanzen sowie natürlich vorkommende oder gezüchtete Hybride mit mindestens einer der vorgenannten Spezies sind, wobei als Hybride alle Ausprägungsformen mischerbiger Pflanzen anzusehen sind, wobei der Naturkautschuk (11) aus Pflanzenmaterial bevorzugt mit einer Kugelmühle durch Scheren und/oder Quetschen bearbeitet wurde.

3. Verfahren nach den Ansprüchen 1 oder 2, **dadurch gekennzeichnet, dass** das Mittel zum Trennen nach Partikelgröße (17) ein Sieb und/oder eine Filtriereinheit ist.

4. Verfahren nach einem der vorangehenden Ansprüche, **dadurch gekennzeichnet, dass** das Mittel zum Trennen nach Dichteunterschieden (22) eine Flotationsanlage und/oder ein Schwimm-Sink-Becken und/oder ein Abscheider, insbesondere ein Sedimentierer ist, wobei der Sedimentierer insbesondere eine Zentrifuge und/oder ein Dekantierer ist.

5. Verfahren nach einem der vorangehenden Ansprüche, **dadurch gekennzeichnet, dass** Schritte des Verfahrens und bevorzugt alle Schritte des Verfahrens kontinuierlich durchgeführt werden.

6. Verfahren nach einem der vorangehenden Ansprüche, **dadurch gekennzeichnet, dass** die naturkautschukreiche Phase vor dem Schritt a) von einer Extraktionseinheit in ein Vorratsbecken (26) gefördert wird.

7. Verfahren nach einem der vorangehenden Ansprüche, **dadurch gekennzeichnet, dass** das Trennen in Schritt b) durch Trommelsieben, bevorzugt mit einem weiteren Spülschritt mit Prozesswasser (4) oder Frischwasser (2), durchgeführt wird.

8. Verfahren nach einem der vorangehenden Ansprüche, **dadurch gekennzeichnet, dass** der Naturkautschuk (11) vor dem Fördern in Schritt c) mit Prozesswasser (4) oder Frischwasser (2) vermischt wird.

9. Verfahren nach einem der vorangehenden Ansprüche, **dadurch gekennzeichnet, dass** der abgetrennte Naturkautschuk (11) auf oder unterhalb der Oberfläche der flüssigen Phase in dem Schwimm-Sink-Becken in das Schwimm-Sink-Becken gefördert wird.

10. Verfahren nach einem der vorangehenden Ansprüche, **dadurch gekennzeichnet, dass** der Naturkautschuk (11) dem Schwimm-Sink-Becken durch Schöpfen von der Oberfläche der flüssigen Phase entnommen wird.

11. Verfahren nach einem der vorangehenden Ansprüche, **dadurch gekennzeichnet, dass** die flüssige Phase eine wässrige Phase ist, wobei das Mischungsverhältnis von den festen Bestandteilen zur wässrigen Phase im Verhältnis 1 zu 5 bis 1 zu 500, bevorzugt im Verhältnis 1 zu 10 bis 1 zu 200 und weiter bevorzugt im Verhältnis 1 zu 20 bis 1 zu 100 beträgt.

12. Verfahren nach einem der vorangehenden Ansprüche, **dadurch gekennzeichnet, dass** vom Naturkautschuk (11) zumindest die Schritte a) bis e) zumindest zweimal, bevorzugt zumindest dreimal, durchlaufen werden.

13. Separationseinheit (12) zum Trennen von Naturkautschuk (11) aus Pflanzenmaterial aus einer naturkautschukreichen Phase von Verunreinigungen und einer Nassphase nach einem Extraktionsverfahren
mit einer ersten Fördereinheit (16) zum Fördern des Naturkautschuks (11) zu einem Mittel zum Trennen nach Partikelgröße (17),
das Mittel zum Trennen nach Partikelgröße (17) zum Trennen des Naturkautschuks (11) von Verunreinigungen,
eine zweite Fördereinheit (20) zum Fördern des mit dem Mittel zum Trennen nach Partikelgröße (17) abgetrennten Naturkautschuks (11) zu einem Mittel zum Trennen nach Dichteunterschieden (22),
das Mittel zum Trennen nach Dichteunterschieden (22) zum Separieren des Naturkautschuks (11) von weiteren Verunreinigungen und
ein Mittel (24) zum Entnehmen des Naturkautschuks (11) aus dem Mittel zum Trennen nach Dichteunterschieden (22).

14. Separationseinheit (12) nach Anspruch 13, **dadurch gekennzeichnet, dass** die Separationseinheit (12) für einen kontinuierlichen Betrieb ausgelegt ist.

15. Separationseinheit (12) nach einem der Ansprüche 13 bis 14, **dadurch gekennzeichnet, dass** das Mittel zum Trennen nach Partikelgröße (17) ein Sieb, insbesondere ein Bogensieb oder ein rotierendes Spaltensieb oder ein Trommelsieb ist, dass bevorzugt eine Spüleinheit zum weiteren Spülen des Naturkautschuks (11) aufweist, wobei das Sieb bevorzugt eine Spaltgröße von 0,5 mm bis 8 mm insbesondere von 1 mm bis 4 mm aufweist.

16. Separationseinheit (12) nach einem der Ansprüche 13 bis 15, **dadurch gekennzeichnet, dass** die erste Fördereinheit (16) und/oder die zweite Fördereinheit (20) geeignet für die Förderung von einem kautschukhaltigen Stoffstrom, bevorzugt eine Verdrängerpumpe, besonders bevorzugt eine Impellerpumpe ist.

17. Separationseinheit (12) nach einem der Ansprüche 13 bis 16, **dadurch gekennzeichnet, dass** das Mittel zum Trennen nach Dichteunterschieden (22) ein Schwimm-Sink-Becken ist, wobei das Schwimm-Sink-Becken im unteren Bereich eine Entnahmevorrichtung (27) zur Entnahme von Verunreinigungen aufweist.

18. Separationseinheit (12) nach einem der Ansprüche 13 bis 17, **dadurch gekennzeichnet, dass** das Schwimm-Sink-Becken ein Abschöpfmittel aufweist, insbesondere ein Förderband, bevorzugt ein wasserdurchlässiges Förderband, wobei das Förderband aus der flüssigen Phase herausragt.

19. Separationsanlage aufweisend eine Separationseinheit (12) nach einem der Ansprüche 13 bis 18, wobei zumindest eine weitere Separationseinheit (12) oder einzelne Komponenten einer Separationseinheit (12) mehrfach ausgeführt sind oder derart in Verbindung stehen, dass zumindest einzelne Komponenten einer Separationseinheit (12) vom Naturkautschuk (11) mehrfach durchlaufbar sind, wobei bevorzugt zumindest zwei weitere Separationseinheiten (12), der einen Separationseinheit (12) folgend angeordnet sind.

20. Von Verunreinigungen und einer flüssigen Phase getrennter Naturkautschuk (11) aus Pflanzenmaterial, von Verunreinigungen und einer Nassphase getrennt durch ein Verfahren nach einem der Ansprüche 1 bis 12 und bevorzugt getrennt mit einer Separationseinheit (12) nach einem der Ansprüche 13 bis 18.

## Claims

1. Process for separating natural rubber (11) from plant material from a natural-rubber-rich phase both from impurities and from a wet phase after an extraction process, comprising the steps of:
a) conveying the natural-rubber-rich phase to a means for separating by particle size (17),
b) separating the natural rubber (11) from the impurities and the wet phase with the means for separating by particle size (17),
c) conveying the separated natural rubber (11) to a means for separating by density differences (22),
d) separating the natural rubber from further impurities with the means for separating by density differences,
e) withdrawing the purified natural rubber (11) from the means for separating by density differences (22).

2. Process according to Claim 1, **characterized in that** the natural rubber (11) is selected from plant material from plants which are members of the Asteraceae, such as Taraxacum sp. or Scorzonera sp., in particular Taraxacum kok-saghyz, Taraxacum krim-saghyz, Taraxacum bicorne, Taraxacum brevicorniculatum, or Scorzonera tau-saghyz, Scorzonera Uzbekistanica, Scorzonera teke-saghyz, Scorzonera hispanica, Scorzonera tausaghyz, or guayule (Parthenium argentatum), or else other species such as Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense, or Silphium sp., or mixtures of these plants and also naturally occurring or cultivated hybrids of at least one of aforementioned species, wherein hybrids are to be understood as meaning all manifestations of heterozygous plants, wherein the natural rubber (11) from plant material has preferably been subjected to treatment by shearing and/or crushing preferably with a ball mill.

3. Process according to Claim 1 or 2, **characterized in that** the means for separating by particle size (17) is a screen and/or a filtration unit.

4. Process according to any of the preceding claims, **characterized in that** the means for separating by density differences (22) is a flotation plant and/or a sink float tank and/or a separator, especially a sedimenter, wherein the sedimenter is especially a centrifuge and/or a decanter.

5. Process according to any of the preceding claims, **characterized in that** steps of the process and preferably all steps of the process are performed in continuous operation.

6. Process according to any of the preceding claims, **characterized in that** the natural rubber-rich phase is conveyed from an extraction unit into a reservoir tank (26) before step a).

7. Process according to any of the preceding claims, **characterized in that** the separating in step b) is performed by drum screening, preferably with a further washing step with process water (4) or fresh water (2).

8. Process according to any of the preceding claims, **characterized in that** the natural rubber (11) is mixed with process water (4) or fresh water (2) before the conveying in step c).

9. Process according to any of the preceding claims, **characterized in that** the separated natural rubber (11) is conveyed into the sink float tank on or below the surface of the liquid phase in the sink float tank.

10. Process according to any of the preceding claims, **characterized in that** the natural rubber (11) is withdrawn from the sink float tank by skimming from the surface of the liquid phase.

11. Process according to any of the preceding claims, **characterized in that** the liquid phase is an aqueous phase, wherein the mixing ratio of the solid constituents to the aqueous phase is in the ratio 1:5 to 1:500, preferably in the ratio 1:10 to 1:200 and more preferably in the ratio 1:20 to 1:100.

12. Process according to any of the preceding claims, **characterized in that** the natural rubber (11) passes through at the least steps a) to e) at least twice, preferably at least three times.

13. Separation unit (12) for separating natural rubber (11) from plant material from a natural rubber-rich phase from impurities and a wet phase after an extraction process comprising
a first conveying unit (16) for conveying the natural rubber (11) to a means for separating by particle size (17),
the means for separating by particle size (17) for separating the natural rubber (11) from impurities,
a second conveying unit (20) for conveying the natural rubber (11) separated with the means for separating by particle size (17) to a means for separating by density differences (22),
the means for separating by density differences (22) for separating the natural rubber (11) from further impurities and
a means (24) for withdrawing the natural rubber (11) from the means for separating by density differences (22).

14. Separation unit (12) according to Claim 13, **characterized in that** the separation unit (12) is configured for continuous operation.

15. Separation unit (12) according to any of Claims 13 to 14, **characterized in that** the means for separating by particle size (17) is a screen, especially a curved screen or a rotating wedge wire screen or a drum screen, which preferably comprises a washing unit for further washing of the natural rubber (11), wherein the screen preferably has a mesh size of 0.5 mm to 8 mm, especially of 1 mm to 4 mm.

16. Separation unit (12) according to any of Claims 13 to 15, **characterized in that** the first conveying unit (16) and/or the second conveying unit (20) is suitable for conveying a rubber-containing material stream and is preferably a displacement pump, particularly preferably an impeller pump.

17. Separation unit (12) according to any of Claims 13 to 16, **characterized in that** the means for separating by density differences (22) is a sink float tank, wherein the sink float tank comprises a withdrawal apparatus (27) for withdrawal of impurities in its lower region.

18. Separation unit (12) according to any of Claims 13 to 17, **characterized in that** the sink float tank comprises a skimming means, especially a conveyor belt, preferably a water-permeable conveyor belt, wherein the conveyor belt projects from the liquid phase.

19. Separation plant comprising a separation unit (12) according to any of Claims 13 to 18, wherein at least a further separation unit (12) or individual components of a separation unit (12) are provided in multiplicate or connected to one another in such a way that the natural rubber (11) can pass through at least individual components of a separation unit (12) multiple times, wherein preferably at least two further separation units (12) are arranged downstream of the one separation unit (12).

20. Natural rubber (11) from plant material separated from impurities and a liquid phase which is separated from impurities and a wet phase by a process according to any of Claims 1 to 12 and preferably separated with a separation unit (12) according to any of Claims 13 to 18.

## Revendications

1. Procédé de séparation de caoutchouc naturel (11) provenant de matière végétale à partir d'une phase riche en caoutchouc naturel, tant des impuretés que d'une phase humide après un procédé d'extraction, présentant les étapes suivantes :
a) transport de la phase riche en caoutchouc naturel vers un moyen destiné à la séparation selon la grosseur de particule (17),
b) séparation du caoutchouc naturel (11) des impuretés et de la phase humide à l'aide du moyen destiné à la séparation selon la grosseur de particule (17),
c) transport du caoutchouc naturel (11) séparé vers un moyen destiné à la séparation selon des différences de densité (22),
d) séparation du caoutchouc naturel d'autres impuretés à l'aide du moyen destiné à la séparation selon des différences de densité,
e) prélèvement du caoutchouc naturel (11) purifié à partir du moyen destiné à la séparation selon des différences de densité (22).

2. Procédé selon la revendication 1, **caractérisé en ce qu'**il s'agit, pour le caoutchouc naturel (11) provenant de manière végétale, de plantes qui sont membres des Asteraceae, tels que Taraxacum sp. ou Scorzonera sp., en particulier Taraxacum kok-saghyz, Taraxacum krim-saghyz, Taraxacum bicorne, Taraxacum brevicorniculatum ou Scorzonera tau-saghyz, Scorzonera Uzbekistanica, Scorzonera teke-saghyz, Scorzonera hispanica, Scorzonera tausaghyz ou Guayule (Parthenium argentatum) ou également d'autres espèces telles que Apocynum venetum, Asclepias incarnata, Asclepias cornuti, Asclepias sub-lata, Asclepias syrica, Cacalia atriplicifolia, Campanula america, Chicorium intybus, Chondrilla ambigua, Chondrilla pauciflora, Crysothamnus nauseousus, Cryptostegia grandiflora, Euphorbia lathyris, Lactuca serriola, Lactuca sativa, Parthenium incanum, Pycnanthemum incanum, Solidago altissima, Solidago graminifolia, Solidago leavenworthii, Solidago rigida, Sonchus arvensis, Sonchus oleraceous, Teucreum canadense ou Silphium sp. ou de mélanges de ces plantes ainsi que d'hybrides naturels ou cultivés avec au moins l'une des espèces mentionnées, les hybrides étant toutes les formes d'expression de plantes hétérozygotes, le caoutchouc naturel (11) provenant de matière végétale ayant de préférence été traité par un broyeur à billes par cisaillement et/ou écrasement.

3. Procédé selon les revendications 1 ou 2, **caractérisé en ce que** le moyen destiné à la séparation selon la grosseur de particule (17) est un tamis ou une unité à filtre.

4. Procédé selon l'une des revendications précédentes, **caractérisé en ce que** le moyen destiné à la séparation selon des différences de densité (22) est une installation de flottation et/ou un bassin de flottaison-coulée et/ou un séparateur, en particulier un dispositif de sédimentation, le dispositif de sédimentation étant en particulier une centrifugeuse et/ou un décanteur.

5. Procédé selon l'une des revendications précédentes, **caractérisé en ce que** des étapes du procédé et de préférence toutes les étapes du procédé sont effectuées en continu.

6. Procédé selon l'une des revendications précédentes, **caractérisé en ce que** la phase riche en caoutchouc naturel est transportée avant l'étape a) depuis une unité d'extraction dans un bassin réservoir (26).

7. Procédé selon l'une des revendications précédentes, **caractérisé en ce que** la séparation dans l'étape b) est réalisée par des tamis à tambour, de préférence avec une autre étape de rinçage par de l'eau de procédé (4) ou de l'eau fraîche (2).

8. Procédé selon l'une des revendications précédentes, **caractérisé en ce que** le caoutchouc naturel (11) est mélangé avant le transport dans l'étape c) avec de l'eau de procédé (4) ou de l'eau fraîche (2).

9. Procédé selon l'une des revendications précédentes, **caractérisé en ce que** le caoutchouc naturel (11) séparé est transporté dans le bassin de flottaison-coulée sur ou sous la surface de la phase liquide dans le bassin de flottaison-coulée.

10. Procédé selon l'une des revendications précédentes, **caractérisé en ce que** le caoutchouc naturel (11) est prélevé à partir du bassin de flottaison-coulée par écumage de la surface de la phase liquide.

11. Procédé selon l'une des revendications précédentes, **caractérisé en ce que** la phase liquide est une phase aqueuse, le rapport de mélange des constituants solides à la phase aqueuse se trouvant dans un rapport de 1:5 à 1:500, de préférence dans un rapport de 1:10 à 1:200 et plus préférablement dans un rapport de 1:20 à 1:100.

12. Procédé selon l'une des revendications précédentes, **caractérisé en ce que** le caoutchouc naturel (11) passe au moins deux fois, de préférence au moins trois fois, au moins dans les étapes a) à e).

13. Unité de séparation (12) destinée à la séparation de caoutchouc naturel (11) provenant de matière végétale à partir d'une phase riche en caoutchouc naturel des impuretés et d'une phase humide après un procédé d'extraction présentant une première unité de transport (16) destinée au transport du caoutchouc naturel (11) vers un moyen destiné à la séparation selon la grosseur de particule (17),
le moyen destiné à la séparation selon la grosseur de particule (17) étant destiné à la séparation du caoutchouc naturel (11) des impuretés,
une deuxième unité de transport (20) destinée au transport du caoutchouc naturel (11) séparé à l'aide du moyen destiné à la séparation selon la grosseur de particule (17) vers un moyen destiné à la séparation selon des différences de densité (22),
le moyen destiné à la séparation selon des différences de densité (22) étant destiné à la séparation du caoutchouc naturel (11) d'autres impuretés et
un moyen (24) destiné au prélèvement du caoutchouc naturel (11) à partir du moyen destiné à la séparation selon des différentes de densité (22).

14. Unité de séparation (12) selon la revendication 13, **caractérisée en ce que** l'unité de séparation (12) est conçue pour un fonctionnement continu.

15. Unité de séparation (12) selon l'une des revendications 13 à 14, **caractérisée en ce que** le moyen destiné à la séparation selon la grosseur de particule (17) est un tamis, en particulier un tamis incurvé ou un tamis rotatif à fente ou un tamis à tambour, qui présente de préférence une unité de rinçage destinée au rinçage supplémentaire du caoutchouc naturel (11), le tamis présentant de préférence une dimension de fente de 0,5 mm à 8 mm, en particulier de 1 mm à 4 mm.

16. Unité de séparation (12) selon l'une des revendications 13 à 15, **caractérisée en ce que** la première unité de transport (16) et/ou la deuxième unité de transport (20) est/sont appropriée(s) pour le transport d'un flux de substances contenant du caoutchouc, de préférence une pompe volumétrique, de manière particulièrement préférée une pompe à hélice.

17. Unité de séparation (12) selon l'une des revendications 13 à 16, **caractérisée en ce que** le moyen destiné à la séparation selon des différences de densité (22) est un bassin de flottaison-coulée, le bassin de flottaison-coulée présentant dans la zone inférieure un dispositif de prélèvement (27) destiné au prélèvement d'impuretés.

18. Unité de séparation (12) selon l'une des revendications 13 à 17, **caractérisée en ce que** le bassin de flottaison-coulée présente un moyen d'écumage, en particulier une bande transporteuse, de préférence une bande transporteuse perméable à l'eau, la bande transporteuse émergeant de la phase liquide.

19. Installation de séparation présentant une unité de séparation (12) selon l'une des revendications 13 à 18, au moins une autre unité de séparation (12) ou des composants individuels d'une unité de séparation (12) étant exécutés plusieurs fois ou reliés de telle sorte qu'au moins des composants individuels d'une unité de séparation (12) peuvent être traversés plusieurs fois par le caoutchouc naturel (11), de préférence deux autres unités de séparation(12) étant agencées en aval de ladite une unité de séparation (12).

20. Caoutchouc naturel (11) provenant de matière végétale, séparé des impuretés et d'une phase liquide, séparé des impuretés et d'une phase humide par un procédé selon l'une des revendications 1 à 12 et de préférence séparé à l'aide d'une unité de séparation (12) selon l'une des revendications 13 à 18.
